# EUROPEAN PATENT APPLICATION

(11) **EP 4 644 342 A1**
(43) Date of publication of application: **05.11.2025**
(21) Application number: 24173556.2
(22) Date of filing: 30.04.2024
(51) Int. Cl.: C03C 1/00, C03C 3/087, C03C 1/02

(54) **GLASS BATCH WITH LOW DUST EMISSIONS AND IMPROVED CARBON-FOOTPRINT**

(71) Applicant: S.A. LHOIST RECHERCHE ET DEVELOPPEMENT, 1342 Ottignies-Louvain-la-Neuve (BE)
(72) Inventor: BEIRAO, Lucas, 1420 Braine L'Alleud (BE); LORGOUILLOUX, Marion, 7110 Strépy Bracquegnies (BE)
(74) Representative: Calysta NV

(57) **Abstract**

The invention relates to an advantageous glass batch comprising silica sand, a sodium raw material, a calcium or calcium-magnesium raw material having less than 10 wt% of carbonate (expressed as CO₂), and an alkaline silicate of the formula A₂O.xSiO₂, with A being Na, K or Li. It also relates to a process of preparing such a glass batch and a glass manufacturing process comprising a step of melting in a glass furnace said glass batch.

## Description

### Technical Field

The present invention is in the context of the glass industry and, in particular, in the domain of glass manufacturing which includes melting a glass batch (or a mixture of raw materials) in a glass furnace followed by a fining in order to produce glass articles, like glasswares, glass sheets or glass containers.

In particular, the invention relates to the preparation of a glass batch, to be fed in a glass furnace, which is designed to allow reducing CO₂ emissions (lower CO₂ footprint) with additionnal advantages like notably addressing the issues of dust emissions. The present invention also relates to the glass batch itself and its feeding into a process of glass manufacturing.

### Prior art

Glass articles, in particular silicious or soda-lime glass articles, are made commonly by melting at high temperatures (e.g. 1200-1500°C) a glass batch comprising mainly silica sand, limestone (i.e. calcium carbonate) and/or dolomite, sometimes called dolostone (i.e. calcium-magnesium carbonate), and soda ash (i.e. sodium carbonate). Depending notably on the glass furnace, the targeted properties and use of the final glass produced, the glass batch comprises these main raw materials in variable amounts and generally, it also comprises other raw materials like, for example, potassium, aluminum, magnesium and/or boron source(s), cullet, and additive(s) (coke, sulphates,...) and coloring agents.

As conventional glass melting processes, especially for float and container glass articles, have used for decades essentially carbonates as sources of sodium, calcium and magnesium, glass industry is considered as an important direct emitter of CO₂ occurring from the decarbonization of these raw materials during melting. In addition to this, CO₂ released during glass melting generates bubbles (foaming) inside the glass melt, therefore a further process of fining is necessary to guarantee the removal of all these bubbles before solidification.

Finally, the glass manufacturing process is also greatly energy-demanding, to melt the solid glass batch and maintain the melt at high temperatures for fining, thereby generating also indirect CO₂ emissions.

Though, CO₂ is an important societal and economical challenge for European industrial players due to the transition to low CO₂ technologies. The global warming, the requirements for CO₂ emissions reduction, CO₂ taxes and the energy prices have put more and more pressure on glass manufacturers in particular and represent a current or future threat in their business competitivity. In that context, the glass industry has invested a lot since years in developments and actions in order to reduce energy consumption and/or CO₂ emissions of its manufacturing processes.

One of the levers identified to reduce the direct and indirect CO₂ emissions per ton of produced glass relies on the use of alternative raw materials, in particular the replacement of carbonates by a corresponding decarbonated material.

In particular, it is already known in the art to replace limestone (i.e. calcium carbonate) by its corresponding oxide (quicklime, i.e. CaO). It is also known, but in a lesser extent, to replace dolomite (i.e. calcium and magnesium carbonate) by its corresponding oxide (dolime, i.e. CaO.MgO).

The main advantage with the use of limestone and/or dolomite as calcium and/or calcium-magnesium source in a glass batch, next to their low costs, is the fact that these products have high densities and show rather coarse grains (up to 3 or even 5 mm) and therefore emit very limited amounts of dust during handling, mixing with the other glass batch raw materials, transport through conveyors, introduction in the furnace, etc. Moreover, limestone and dolomite are inert in the presence of water, meaning that if the glass manufacturer anyhow wishes to further decrease dust emissions, the batch can be moisturized without any issue (in particular, without any chemical reactions).

Replacing limestone by quicklime (or dolomite by dolime, or both) in a glass batch may at first sight not seem to be a solution to reduce CO₂ emissions as the CO₂ from the limestone and/or dolomite will anyway be released, as quicklime and dolime are manufactured by burning limestone or dolostone in a furnace called commonly "lime kiln" where the carbonates are converted into oxides and CO₂. However, it is known in the art that the energy efficiency of a lime kiln is higher than that of a glass furnace, meaning that the energy required to decompose 1 ton of limestone or dolostone will be lower in a lime kiln than in a glass furnace, which implies consequently less CO₂ emissions from fuels.

Moreover, it appears that the melting (and fining) kinetics of a glass batch made with quicklime and/or dolime as calcium and/or calcium and magnesium source is increased compared to that of a glass batch made with limestone and/or dolostone. This means that, in a given glass furnace at a given temperature, the pull can be increased and therefore, the energy consumption as well as the CO₂ emitted per ton of glass can be decreased. Nevertheless, replacing limestone by quicklime and/or dolostone by dolime in a glass batch leads to other issues, particularly related to their reactivity with water and associated dust emissions.

In a glass manufacturing process, dust is potentially emitted i) in the conveying and dosing circuits of the raw materials upstream of the batch mixer, ii) in the batch mixer, iii) in the batch conveying circuits upstream of the furnace, iv) when the batch is introduced into the furnace, but also v) in the furnace itself. Dust emissions may therefore have an impact at different locations and generate adverse effects like losses of raw materials, pilling-up in /clogging of the fumes ducts and heat exchangers, reduction of the lifetime of the refractories, increase of cleaning requirements, creation of a need for dust removal circuits, generation of health hazards for workers, etc.

The particle size of quicklime and/or dolime can be adjusted by several means (milling, screening, classification...) in order to manufacture a product that is low in terms of dust emissions. However, quicklime and dolime have a lower mechanical resistance than limestone and dolostone, and therefore, after their manufacturing with a well-controlled particle size, they are prone to generate more fines during transport, handling, loading..., which results in the end, especially upon arrival at customer site, to increased dust emissions upstream of the batch mixer compared to when using limestone and dolostone.

Glass batch moisturization is a very common practice to reduce dust emissions in general in the glass industry and also avoid segregation during batch storage. However, water and quicklime react together exothermically, which results in a release of heat that makes the batch difficult to handle. Moreover, this hydration reaction (or slaking) generates calcium hydroxide particles (hydrated lime) that have a smaller granulometry and are lighter ("fines") than the initial oxide and leads thus to the generation of additional fine particles and increased significantly dust emissions. Moreover, one additional drawback of such use of water increases slightly the energy consumption, due to the need of evaporation of this added water during the melting step.

In many cases, tendency would be to add more water to circumvent these difficulties, but more water means more hydration, therefore more heat released, more fine particles and more energy to decompose the hydrated compounds the furnace.

One way to reduce hydration of quicklime/dolime in a glass batch is to screen out the fine particles in order to reduce the points of contact between the lime particles and water. This process is called herein "defillerization". This solution is, for example, described in document WO2023/281182A1. However, this generates a by-product (fines) for which other applications have to be found, otherwise it represents a loss.

In addition to dust emission reduction, other reasons why water is usually added to glass batches are to avoid segregation of the raw materials during storage of the glass batch before entrance into the glass furnace and to favor what is called herein "pile effect". Indeed, adding water to a batch containing limestone and dolostone creates some cohesion between the particles which will reduce risk of segregation during storage of the batch and improve batch homogeneity. Moreover, thanks to the presence of water, the batch will create small piles when entering into the furnace, whereas an equivalent dry batch would create a fine layer on top of the molten glass when entering into the furnace. Having piles brings the advantage in current gas fired furnaces (at least furnaces with flames) that the batch will be closer to the flame that is usually coming from the top in direction of the molten glass bath. This proximity leads to a quicker diffusion of the heat throughout the batch, to the quicker formation of the first liquid phase and thus to a quicker melting reaction. In a batch containing quicklime and/or dolime, the water will be consumed by hydration, even if more water is added, and the anti-segregation as well as the "pile effect" will be significantly reduced. Finally, adding water to a glass batch is also beneficial for facilitating dosage of raw materials.

The issue of quicklime reactivity with water could be solved by using hydrated lime or slaked lime (Ca(OH)₂) instead but this solution has not been adopted in the art because hydrated lime is known to have a smaller granulometry than quicklime and therefore to emit more dust.

Several solutions to the above issues when replacing limestone by quicklime have been proposed in the art.

Hence, in document US4028131, it is proposed to replace limestone by quicklime and combine it with a specific amount of caustic soda (e.g. a 70% concentrated solution at 80°C) in the glass batch. According to US4028131, there is a synergistic effect of the use of quicklime with caustic soda, which reduces the disadvantage arising from the use on fine powders of quicklime, does not require sizing of the material and allows an increase in speed of fusion and fining. However, the use of concentrated solution of caustic soda brings some drawbacks and should be avoided, when possible, in industrial process.

In document WO2019/002802A1, it is proposed to replace limestone by quicklime in a glass batch together with a specific feature of the process. Hence, WO2019/002802A1 discloses a process for manufacturing glass comprising the preparation of a glass batch, in which water, sand and sodium carbonate are mixed in specific proportions and, after a delay (e.g. a time of at least 10 minutes or preferably at least one hour), quicklime is added to the batch. According to the applicant, such a specific process allows to decrease energy consumption and amount of CO₂ release. Moreover, issues regarding batch dust are also reduced (the initial particle size of the constituents introduced into the batch would be substantially conserved) since the quicklime is not put into contact with the moisturized batch. However, delaying the addition of a specific raw material (by one hour, for example) compared to the others represents an additional operational burden for the glass workers and a delay of the overall process, what should be avoided at at maximum.

Next to that, it is to be noted that replacing dolomite by its corresponding oxide (dolime) leads to the same issues as those explained in relation with the replacement of limestone by quicklime, and that the issues of too fine particle size mentioned earlier in the case of the use of hydrated lime would be encountered as well if hydrated dolime (Ca(OH)₂.xMg(OH)₂.(1-x)MgO, with 0 ≤ x ≤ 1) would be used to replace dolostone/dolomite.

Therefore, in the current environmental and economic situation, there is still a need in the glass industry to have alternative glass batch solutions leading to reduced CO₂ emissions (direct and indirect) while (i) having a low dust emission during its handling, transportation and storage, (ii) limiting the use of water to be added, and (ii) avoiding to modify/adapt the established glass manufacturing process.

### Objectives of the invention

The present invention has notably the objective of overcoming the cited drawbacks of the prior art.

More precisely, an objective of the invention is to provide an improved glass batch, aimed to be introduced in a glass manufacturing process.

In particular, an objective of the invention is to provide a glass batch that allows reducing the CO₂ emission of the glass manufacturing process by ton of glass produced.

Another objective of the invention is to provide a glass batch that allows increasing energy efficiency and improve the kinetics of the glass manufacturing process.

Still another objective of the invention is to provide a glass batch that has a low dust emission, in particular during its handling, its conveying and its dosing upstream of the glass batch mixer, even though it contains fine particles.

Still another objective of the invention is to provide a glass batch that does not need any adaptation of the established manufacturing process (e.g., batch sequencing, delaying) and without impacting glass quality.

Still another objective of the invention is to provide a glass batch that allows reducing the amount of water needed for moisturization, While still having the other effects (in addition to dust suppression) of the water usually added to a glass batch, namely avoiding segregation of the raw materials during storage of batch, ensure stable dosage of batch into the furnace and keep a batch that falls into small piles into the furnace

Finally, another objective of the invention is to provide a solution to the disadvantages of the prior art that is simple and cheap.

### Description of the invention

The invention relates to a glass batch comprising:
- silica sand,
- a sodium raw material,
- a calcium or calcium-magnesium raw material having less than 10 wt% of carbonate (expressed as CO₂), and
- an alkaline silicate of the formula A₂O.xSiO₂.yH₂O, with A being Na, K or Li.

Hence, the invention is based on a novel and inventive approach. In particular, the inventors evidenced that, when adding an alkaline silicate compound (e.g. "waterglass") in a glass batch, it is possible to replace totally Ca and/or Ca-Mg carbonated source (limestone and/or dolostone) by quicklime and/or dolime, thereby reaching the known and above-cited advantages linked to the use of decarbonated compounds (reduced CO₂ emissions, energy efficiency, increased pull, ...) while, despite the use of quicklime and/or dolime, keeping low dust emissions, keeping the pile effect and low segregation and reducing advantageously the amount of water needed in the batch to get the same anti-dust effect as when using exclusively limestone and/or dolostone as Ca or Ca-Mg source. The "waterglass" works indeed as a binding agent to reduce dust during glass batch handling/transport and permits also to add less or even no water (else than the water already contained in the waterglass), which is advantageous as the quicklime/dolime will have less water available to react with which will mitigate the formation of dusty hydrates in favour of reducing further dust emissions. This is also advantageous regarding energy consumption (as less water will be needed to be evaporated at the melting step).

The proposed solution also works with raw materials that contain natural moisture. It is, for example, advantageous to add quicklime and/or dolime to the other raw materials of the glass batch (with their natural moisture), as such quicklime and/or dolime will drysaid other raw materials through its/their hydration, followed by addition to the total glass batch of an alkaline silicate that will act as a binding agent. This will give an energy gain (by avoiding water evaporation).

The invention also relates to a process of preparing a glass batch, to be fed in a glass furnace, comprising:
(i) mixing at least the following raw materials : silica sand, a sodium raw material and a calcium or calcium-magnesium raw material, and
(ii) adding an alkaline silicate of the formula A₂O.xSiO₂.yH₂O, with A being Na, K or Li,
said calcium or calcium-magnesium raw material having less than 10 wt% of carbonate (expressed as CO₂).

Finally, the invention also relates to a glass manufacturing process comprising a step of melting in a glass furnace a glass batch according to the invention.

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written.

By the terms "raw material" and "glass batch" and "silica sand ", it is intended herein the meaning given commonly in the related glass field and is fully understood by those skilled in the art.

By "glass manufacturing process" and as commonly adopted in the art, it is intended a process that allows manufacturing glass articles like glassware, glass sheets or glass containers, through melting of a glass batch comprising raw materials followed by fining a glass melt in a glass furnace.

According to the invention, the glass batch comprises a sodium raw material. Preferably, said sodium raw material comprises soda ash (i.e. sodium carbonate) and/or soda (i.e. sodium oxide), preferably it consists essentially in soda ash and/or soda. By "consists essentially", this means herein that it may anyway comprises impurities, e.g. in small amounts, next to soda ash and/or soda.

According to the invention, the glass batch comprises a calcium or calcium-magnesium raw material having less than 10 wt% of carbonate (expressed as CO₂). The amount of carbonate (expressed as CO₂) according to the invention means the carbonate content in the raw material as measured by loss on ignition (or LOI) between 550°C and 950°C.

The LOI may be obtained commonly using thermogravimetric analysis (TGA) performed by gradually raising the temperature of a sample of the composition, at a rate of 5°C/min from room temperature to at least 950°C (or to constant mass) in a furnace under a flow of nitrogen, as its weight is measured on an analytical scale. The weight of the sample is plotted against temperature to observe thermal transitions/decompositions that occur upon raising temperature. The mass loss (release of CO₂) occurring between 550°C and 950°C (or constant mass) corresponds to the amount of carbonate (expressed as CO₂) according to the invention.

Preferably, said calcium or calcium-magnesium raw material comprises less than 7 wt% of total carbonate (expressed as CO₂), and more preferably less than 5 wt%, less than 3wt%, less than 2wt% or even less than 1 wt% of total carbonate (expressed as CO₂). This is advantageous as this allows using very few amounts to almost no carbonated Ca or Ca-Mg raw material and thereby, amongst others, reducing CO₂ emissions of the glass manufacturing process.

According to an advantageous embodiment, said calcium or calcium-magnesium raw material consists essentially in quicklime and/or dolime. This means that the calcium and magnesium in the glass batch, and consequently in the final glass product, comes essentially from quicklime and/or dolime. By "consists essentially", this means herein that said calcium or calcium-magnesium raw material may anyway comprises "impurities", e.g. in small amounts, such as magnesium oxide, MgO, sulfur oxide, SO₃, silica, SiO₂ or even alumina, Al₂O₃,..., the sum of which being at a level from 0.5 to 5 wt%, preferably less than 2 wt%, more preferably less than 1 wt% The impurities are expressed herein under their oxide form, but of course, they might appear under different phases. Quicklime and/or dolime also contains generally some amounts of residual limestone/dolostone, called unburned residues. These unburned residues are taken into account in the carbonate content as defined above.

By "quicklime", it is meant within the meaning of the present invention a mineral solid material for which the chemical composition is mainly calcium oxide, CaO. Quicklime is usually obtained by calcination of limestone. It may commonly comprise some impurities present in the initial limestone minerals from which it derives and its calcination process (e.g. contamination from the fuel). Quicklime contains generally also some % of residual limestone, called unburned residues.

By "dolime", it is meant within the meaning of the present invention a mineral solid material for which the chemical composition is mainly calcium oxide and magnesium oxide, CaO.MgO. Dolime is usually obtained by calcination of dolostone or dolomite. It may commonly comprise some impurities, present in the dolomite mineral from which it derives and its calcination process (e.g. contamination from the fuel). Dolime contains generally also some % of residual dolostone, called unburned residues.

By "limestone", as commonly adopted in the art, it is meant herein calcium carbonate of the formula CaCOs. By "dolostone", also called dolomite, as commonly adopted in the art, it is meant herein calcium magnesium carbonate of the formula CaMg(CO₃)₂.

In the invention, advantageously, many different types of limes (quicklime/dolime) may be used. No restriction on quicklime/dolime reactivity, porosity or morphology exists. Possibly a crushing step can be necessary to adequate the maximum particles size (e.g. 10 mm). No classification (screening, air classifying) is mandatory, but it can be used if needed for the industrial process and/or mine plan optimization.

According to another embodiment of the invention, said calcium or calcium-magnesium raw material in the invention has a maximum quantity of fines of 90 wt%, preferably of 80 wt%, or 70 wt% and more preferably 60 wt%. By "fines", it is meant herein the particles with size below 0.1 mm as measured by screening.

According to another embodiment of the invention, said calcium or calcium-magnesium raw material the invention has a minimum quantity of fines of 10 wt%, preferably of 15 wt% and more preferably, 20 wt%. This means that it is not "defillerized" and despite this, is appropriate to be used in the invention and thereby allows the lime producer to valorize most (or all) of the lime produced industrially, including fine fractions. According to very preferred embodiment of the invention, the quicklime and/or dolime in the invention has a minimum quantity of fines of 60 wt%, preferably of 70 wt% and more preferably, 80 wt% or even up to 100 wt%.

According to an embodiment of the invention, said calcium or calcium-magnesium raw material comprises less than 5 wt%, preferably less than 4 wt%, less than 3 wt% and more preferably less than 2 wt% or less than 1 wt% of bound water. The amount of bound water (expressed as H₂O) according to the invention means the water content in the raw material as measured by loss on ignition (or LOI) between 250°C and 550°C. This amount of bound water corresponds roughly to the Ca and/or Mg hydroxides (Ca(OH)₂ and/or Mg(OH)₂) that were formed by partial hydration (on the surface of the particles) of the quicklime and/or dolime between the moment when they came out of the limestone or dolostone kiln and the moment when they are used as a raw material for glass manufacturing.

According to an embodiment of the invention, the calcium or calcium-magnesium raw material has a maximum particle size of 10 mm, preferably 8 mm and, more preferably, 5 mm. By "maximum particle size" in the sense of the invention, it is meant the mesh size of a screen through which more than 97%, preferably more than 98% and more preferably more than 99% of the composition can pass.

Preferably, the calcium or calcium-magnesium raw material of the invention comprises less than 2000 ppm, preferably less than 1800 ppm and, more preferably, less than 1000 ppm of iron (expressed as Fe₂O₃). This is advantageous as the glass manufacturers generally seek to avoid iron as much as possible in many glass articles, due to its high coloring power even at very low amounts.

Preferably, the calcium or calcium-magnesium raw material of the invention has a Dust Area (a.u.) below 80, preferably below 50 and, more preferably, below 30, as measured on an amount of 50 grams of said composition in a dry state and with a measurement time of 30 seconds. By "in a dry state", it is meant herein the raw material as prepared, without adding external water.

According to the invention, the glass batch comprises an alkaline silicate of the formula A₂O.xSiO₂.yH₂O, with A being Na, K or Li. Preferably, the alkaline silicate is a sodium silicate (A = Na). One example of sodium silicate is sodium metasilicate (SiO₂.Na₂O.yH₂O, also noted Na₂SiO₃.yH₂O, with y = 0, 5 or 9), also called "waterglass" or "water glass" or "liquid glass". Some other sodium silicates exist and may be used in the invention, like Na₂O.2SiO₂ (also called sodium disilicate), Na₂O.2,4SiO₂, or Na₂O.3,4SiO₂ (also called sodium trisilicate).

According to an embodiment, the alkaline silicate in the form of a powder or in the form of an aqueous solution. More preferably, it is in the form of an aqueous solution. For example, it may be an aqueous solution of sodium metasilicate (waterglass) having a solid content ranging between 5 and 60 wt%, either ready to use (preferred) or made by dissolution of solid sodium metasilicate in water.

According to an embodiment, the amount of alkaline silicate is lower than 10wt% related to the weight of the glass batch. Preferably, it is lower than 8wt%, lower than 7wt%, lower than 5wt%, or even lower than 3wt% related to the weight of the glass batch.

According to another embodiment, the amount of alkaline silicate is higher than 0.1wt% related to the weight of the glass batch. Preferably, it is higher than 0.2 wt%, higher than 0.3wt%, higher than 0.4 wt% or even higher than 0.5 wt% related to the weight of the glass batch.

In one particularly advantageous embodiment, the glass batch comprises further a non-aqueous organic fluid. Preferably, said non-aqueous organic fluid compound is a mineral oil, a polyolefin, a vegetal oil or a mixture thereof. More preferably, it is a mineral oil, a polyolefin, or a mixture thereof. In a very preferred embodiment, it is a mineral oil. Mineral oil is also known as "white oil" or as "liquid petrol" or as "paraffine oil" or as "liquid paraffin" or as "paraffinum". Preferably also, the non-aqueous organic fluid of the invention is essentially free of aromatic fractions and/or polynuclear compounds. By "essentially free", it is meant that, if it contains aromatic fractions and/or polynuclear compounds, it is in amounts in the order of impurities, for example below 1wt%.

According to an embodiment of the invention, the glass batch comprises below 3 wt% of free water (expressed as H₂O). Preferably, the composition comprises below 2 wt% of free water, more preferably, below 1 wt%. By "free water" in the invention, it is meant water that is present as such in the glass batch (not in the form of hydroxide groups), as crystalline water and/or as adsorption water and/or as water brought by moisturization. The amount of free water according to the invention corresponds herein to the water content in the composition as measured by loss on ignition (or LOI) below 150°C. The free water, if comprised in the glass batch, is released below 150°C and the mass loss occurring below 150°C corresponds therefore to the amount of free water (expressed as H₂O) according to the invention.

The glass batch according to the invention may further comprise other raw materials/compounds, in nature and amounts depending on the targeted glass composition and properties (i.e. its desired properties in terms of chemical/mechanical resistance, colour,...),. Examples of possible raw materials for the glass batch are potash, salt cake (or sodium sulfate, Na₂SO₄), nephelin, feldspar, boron oxide, barium oxide, cullet, selenium, coloring agents (cobalt oxide, chromium oxide,...), clarifying agents (cerium oxide,..), oxidizers (sodium nitrate,...), reducing agents (graphite, coke, pyrite,...).

Preferably, the calcium orcalcium-magnesium raw material is in an amount of 0.1 to 35 wt% in said glass batch, depending on the targeted content of Ca and Mg in the final glass product. Preferably, the calcium or calcium-magnesium raw material is in an amount of 0.1 to 20 wt% in said glass batch.

Preferably the glass batch has a dust area below 250, preferably below 200 and more preferably below 150, or even below 100, as measured on an amount of 100 grams of said glass batch in a dry state and with a measurement time of 30 seconds. By "in a dry state", it is meant herein the glass batch as prepared, without adding external water. This is advantageous as this means that the glass batch of the invention in a dry state has an excellent behavior in terms of dust emissions.

Preferably also, the glass batch, in the presence of 3 wt% water and after 24h reposing/storage time, has a dust area below 250, preferably below 200 and more preferably below 150.

The process of preparing a glass batch according to the invention comprises:
(i) mixing at least the following raw materials : silica sand, a sodium raw material and a calcium or calcium-magnesium raw material, and
(ii) adding an alkaline silicate of the formula A₂O.xSiO₂.yH₂O, with A being Na, K or Li,
said calcium or calcium-magnesium raw material having less than 20 wt% of carbonate (expressed as CO₂).

Features and embodiments described above in relation with the glass batch (for example, related to the calcium or calcium-magnesium raw material, for quicklime and/or dolime, for the alkaline silicate, for the other raw materials, etc.) are applicable to the process of preparing a glass batch according to the invention as well.

At the step (i) of mixing, there is no particular limitation regarding the way and the order of mixing the raw materials. The raw materials may be blended/mixed by any appropriate method known in the art and in the order the most suitable for the glass manufacturer taking into account, for example, the existing installation or other requirement(s). In particular, the step of mixing according to the invention may be implemented commonly by adding said raw materials into a glass batch mixer, in the appropriate order and with the appropriate tools (storing silos, dosing means, conveying means, etc.).

The step (ii) of adding said alkaline silicate may be carried according to any known and appropriate method in the art. For example, the alkaline silicate, if in the form of an aqueous solution, may be added by spraying. For example also, the alkaline silicate, if in the form of a powder, may be simply added, after or concomitantly to step (i), to the raw materials, e.g. in the glass batch mixer used at step (i).

According to a particularly interesting embodiment, the process of preparing a glass batch comprises, before step (i) a further step of adding an non aqueous organic fluid to said calcium or calcium-magnesium raw material. Preferably, said non-aqueous organic fluid compound is a mineral oil, a polyolefin, a vegetal oil or a mixture thereof. More preferably, it is a mineral oil, a polyolefin, or a mixture thereof. In a very preferred embodiment, it is a mineral oil. Mineral oil is also known as "white oil" or as "liquid petrol" or as "paraffine oil" or as "liquid paraffin" or as "paraffinum". Preferably also, the non-aqueous organic fluid of the invention is essentially free of aromatic fractions and/or polynuclear compounds. By "essentially free", it is meant that, if it contains aromatic fractions and/or polynuclear compounds, it is in amounts in the order of impurities, for example below 1wt%.

According to this last embodiment, the non-aqueous organic fluid is added in an amount equal or lower than 8 wt%, preferably equal or lower than 6 wt%, or equal or lower than 4 wt%, more preferably equal or lower than 2 wt% or even lower than 1 wt%, related to the total weight of said calcium or calcium-magnesium raw material. According to this last embodiment also, the non-aqueous organic fluid is added in an amount equal or higher than 0.1 wt%, preferably equal or higher than 0.2 wt%, more preferably equal or higher than 0.3 wt%, or equal or higher than 0.5 wt%, or equal or higher than 0.7 wt% related to the total weight of said calcium or calcium-magnesium raw material.

The step of adding said non-aqueous organic fluid may be carried out by any known and appropriate method, for example, it may be added by spraying. In case the non-aqueous organic fluid is too viscous at ambient temperature, a heating step may be applied before its adding to the calcium or calcium raw material, to improve the additive flowability (for instance a heating at 50°C). For example, mineral oils with low viscosity (e.g. kinematic viscosity under 80 cSt at 40°C) shall be avoided due to Health and Safety issues, as they are classified as CMR.

The glass batch of the invention is of particular interest to be fed/used in a glass manufacturing process comprising a step of melting in a glass furnace said glass batch. Advantageously, the process of manufacturing a glass according to the invention is for manufacturing a flat (e.g. float) glass or a container/hollow glass.

It should be understood that the present invention is not limited to the described embodiments and that variations can be applied without going outside of the scope of the claims. It is further noted that the invention relates to all possible combinations of features, and preferred features, described herein and recited in the claims.

The following examples are provided for illustrative purpose and are not intended to limit the scope of this invention.

### Examples

Raw materials and glass batches according to the invention were prepared at lab scale.

### Dust area evaluation

The advantages of the invention in terms of dust emissions were determined by measuring the known parameter called "Dust Area".

The Dust Area were measured with a Microtrac DustMon RD100 from Retsch. This equipment consists of a dosing control system (sample beaker with a valve and a tube), a sample collector, a light source and a detector. The solid sample to measure is poured into the sample beaker. On starting the measurement, the valve opens and the sample drops down the tube into the sample collector. The dust generated in the sample collector is then measured by the detector, based on the obscuration of the light source. In order to be able to compare values between each other, the amount of sample used for the analyses to be compared must be the same, from a sample to another.

The resulting dust concentration is plotted vs time to reach a curve. The analysis is done during 30 seconds with 1000 measurements per second. The area under said curve, called Dust Area, expressed in arbitrary units (a.u.) is determined as an evaluation of the level of dust emissions of the sample.

For the composition according to the invention and raw materials taken independently, the amount of sample used is 50 g, in a dry state (no water added). In such conditions, measurement error is about ± 5 %.

For the glass batches prepared according to the invention, the amount of sample used is fixed at 100 g in a dry state (no water added) or in a wet state (3 wt% water added), which allows to express the dust emissions per t of batch and to compare batches prepared with different sources of calcium or calcium-magnesium. In such conditions, measurement error is about ± 5 %.

### Example 1

Three glass batches were prepared by mixing raw materials including quicklime, silica sand, soda ash, nepheline, syenite, sodium sulphate as well as dolomite (to bring magnesium). The targeted glass batch composition in this example 1 corresponds to a typical container glass composition and is the following : 71.9 % SiO₂, 12.8 % Na₂O, 1.2 % K₂O, 10.7 % CaO, 1.4 % MgO, 1.8 % Al₂O₃, 0.08 % Fe₂O₃ and 0.12 % SO₃.

Each preparation was done in a planetary mixer (max speed during 5 minutes) and about 2 kg of glass batch was obtained.

A sample of about 500 g of each glass batch obtained was taken for dust emission measurements in a dry state. The remaining part was treated with 3wt% of water (45 g of water for 1.5 kg of batch) and optionally a waterglass solution into the mixer. Agitation was maintained during 5 minutes. The amount of waterglass solution (44wt% sodium silicate and 56wt% water) added were the following :
- Reference : no addition
- EX.1.1 : 0.5 %wt waterglass solution (0.22 %wt sodium silicate + 0.28 %wt water) (invention);
- Ex.1.2 : 1 %wt waterglass solution (0.44 %wt sodium silicate + 0.56 %wt water) (invention).

Each obtained moisturized glass batch ("wet batch") was then recovered and split into 2 samples of about same size and put in separate buckets closed with plastic lids. Those samples were used to measure dust emissions after 6 hours and 24 hours (from water/waterglass addition).

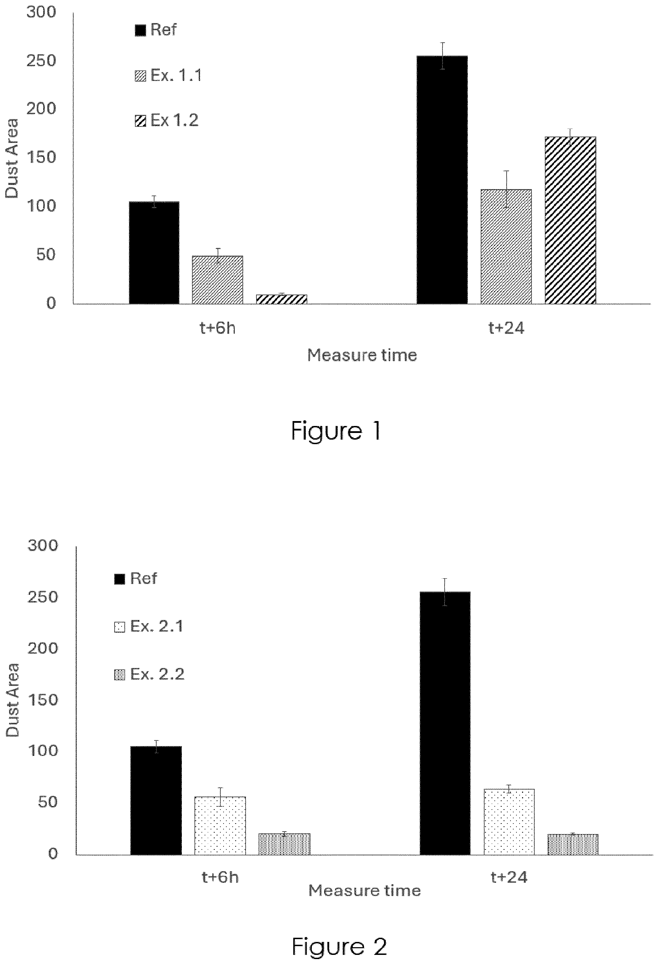

Results of dust area of the three glass batches in a wet state (t+6 and t+24h) are presented in Figure 1.

As can be seen, after 6h, the glass batches of the invention (Exs. 1.1 and 1.2) show a significantly lower dust area than the reference without waterglass.

Moreover, the addition of 0.44 %wt sodium silicate (Ex. 1.2) even allows suppressing most of the dust emissions after 6h. An increase at 24h was however observed due to the additional water used (0.56 wt% extra water added via the solution of waterglass) but this storage time is higher than the handling time expected for most of the glass plants and also it is still ower than the reference.

### Example 2

Two glass batches according to the invention (Exs. 2.1 and 2.2) were prepared by mixing raw materials including quicklime, silica sand, soda ash, nepheline, syenite, sodium sulphate as well as dolomite (to bring magnesium). The targeted glass batch composition in this example 2 is the same as in Example 1.

Each preparation was done in a planetary mixer (max speed during 5 minutes) and about 2 kg of glass batch was obtained.

A sample of about 500 g of each glass batch obtained was taken for dust emission measurements in a dry state. The remaining part was treated as follows (into the mixer and agitation maintained during 5 minutes):
- Reference : addition of 3 wt% of water (45 g of water for 1.5 kg of batch);
- Ex. 2.1 : addition of 0.5 %wt of a 44 wt% waterglass solution (0.22 %wt sodium silicate + 0.28 %wt water);
- Ex. 2.2 : addition of 1 wt% of a 44 wt% waterglass solution (0.44 wt% sodium silicate + 0.56 wt% water).

For the sake of clarity, no water except that coming from the waterglass solution was added in Exs 2.1 and 2.2.

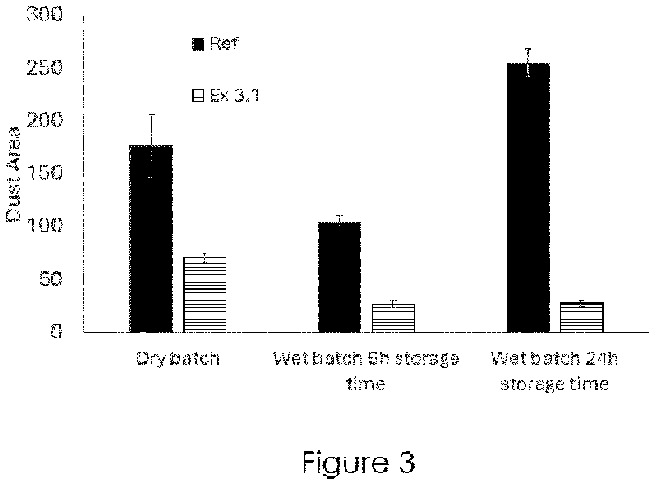

Each obtained glass batch ("wet batch") was then recovered and split into 2 samples of about same size and put in separate buckets closed with plastic lids. Those samples were used to measure dust emissions after 6 hours and 24 hours (from addition of waterglass or water). Results are shown in Figure 3.

Ex. 2.1 shows after 6h a higher dust area than its equivalent with additional water (Ex. 1.1) but, after 24h, the value remains almost stable, and significantly lower than the reference that has increased a lot from 6 to 24h.

Ex.2.2 shows after 6h a higher dust area than its equivalent with water (Ex. 1.2) but, after 24h, the value remains almost stable, very low and significantly lower than the reference that has increased a lot from 6 to 24h.

This Example 1 shows that the invention allows to replace totally the usual Ca carbonated source (limestone) by quicklime in a glass batch, thereby reaching a (reduced CO₂ emissions, energy efficiency, increased pull, ..., while having very low dust emissions while and reducing the amount of water in the batch. This is advantageous as the quicklime has then less water available to react and therefore mitigate the formation of dusty hydrates in favour of reducing further dust emissions. This is also advantageous regarding energy consumption (as less water will be needed to be evaporated at the melting step).

### Example 3

One glass batch according to the invention (Ex. 3.1) was prepared by mixing raw materials including a "modified quicklime", silica sand, soda ash, nepheline, syenite, sodium sulphate as well as dolomite (to bring magnesium). The targeted glass batch composition in this example 3 corresponds to the same as in Examples 1 and 2. Reference was the same as for Example 1.

The "modified quicklime" was prepared, previously to the glass batch, by mixing a quicklime (same as in Examples 1 and 2) and a mineral oil Finavestan A100B (9 grams of mineral oil for 991 grams of quicklime) in a planetary mixer (max speed during 5 minutes). Then, the obtained material was left 24h to age before using it to prepare glass batch of Example 3.1.

The mixing of all raw materials (including the modified quicklime prepared as above) was done in a planetary mixer (max speed during 5 minutes) and about 2 kg of glass batch was obtained.

A sample of about 500 g of each glass batch (Ex. 3.1 and reference) obtained was taken for dust emission measurements in a dry state. The remaining part was treated as follows (into the mixer and agitation maintained during 5 minutes):
- Reference : addition of 3 wt% of water (45 g of water for 1.5 kg of batch)
- Ex. 3.1 : addition of 0.5 wt% of a 44bwt% water glass solution (0.22bwt% sodium silicate + 0.28bwt% water).

For the sake of clarity, no water except that coming from the waterglass solution was added in Ex 3.1.

Each obtained glass batch ("wet batch") was then recovered and split into 2 samples of about same size and put in separate buckets closed with plastic lids. Those samples were used to measure dust emissions after 6 hours and 24 hours (from addition of waterglass or water). Results are shown in Figure 3, for wet and dry states.

As compared to Ex. 2.1 (same amount of waterglass) which has already very good results, this Example 3.1 further shows that the combination of the use of a modified quicklime (with a mineral oil) and waterglass in a glass batch gives still better results : lower dust area after 6h, which remains even more stable after 24h.

## Claims

1. Glass batch comprising:
- silica sand,
- a sodium raw material,
- a calcium or calcium-magnesium raw material having less than 10 wt% of carbonate (expressed as CO₂), and
- an alkaline silicate of the formula A₂O.xSiO₂.yH₂O, with A being Na, K or Li.

2. Glass batch according to claim 1, **characterized in that** said calcium or calcium-magnesium raw material less than 5 wt% of bound water expressed as H₂O.

3. Glass batch according to claim 1 or 2, **characterized in that** said calcium or calcium-magnesium raw material consists essentially in quicklime and/or dolime.

4. Glass batch according to any of the preceding claims, **characterized in that** said sodium raw material comprises soda ash and/or soda, preferably consists essentially in soda ash and/or soda.

5. Glass batch according to any of the preceding claims, **characterized in that** the amount of alkaline silicate is lower than 10wt%, preferably lower than 5 wt% related to the weight of the glass batch.

6. Glass batch according to any of the preceding claims, **characterized in that** the amount of alkaline silicate is higher than 0.1wt%, preferably higher than 0.5 wt% related to the weight of the glass batch.

7. Glass batch according to any of the preceding claims, **characterized in that** said akaline silicate is a sodium silicate.

8. Glass batch according to any of the preceding claims, **characterized in that** said akaline silicate is in the form of an aqueous solution.

9. Glass batch according to any of the preceding claims, **characterized in that** said calcium or calcium-magnesium raw material has a maximum particle size of 10 mm, preferably 8 mm and, more preferably, 5 mm.

10. Glass batch according to any of the preceding claims, **characterized in that** it comprises further a non-aqueous organic fluid compound, preferably a mineral oil, a polyolefin, a vegetal oil or a mixture thereof.

11. Glass batch according to any of the preceding claims, **characterized in that** it comprises below 3 wt% of free water.

12. Process of preparing a glass batch, to be fed in a glass furnace, comprising:
(i) mixing at least the following raw materials : silica sand, a sodium raw material and a calcium or calcium-magnesium raw material, and
(ii) adding an alkaline silicate of the formula A₂O.xSiO₂.yH₂O, with A being Na, K or Li,
said calcium or calcium-magnesium raw material having less than 10 wt% of carbonate (expressed as CO₂).

13. Process of preparing a glass batch according to the preceding claim, **characterized in that** said calcium or calcium-magnesium raw material consisting essentially in quicklime and/or dolime.

14. Process of preparing a glass batch according to any of claims 13-14, **characterized in that** said akaline silicate is sodium silicate, preferably in the form of a powder or in the form of an aqueous solution.

15. Glass manufacturing process comprising a step of melting in a glass furnace a glass batch according to claims 1-11.
